# EUROPEAN PATENT APPLICATION

(11) **EP 0 945 751 A1**
(43) Date of publication of application: **29.09.1999**
(21) Application number: 98120665.9
(22) Date of filing: 04.11.1998
(51) Int. Cl.: G02C 5/22

(54) **Turning mechanism of eye glasses and eye glasses provided with the turning mechanism**

(30) Priority: 26.03.1998 JP 9850098
(71) Applicant: Charmant Co., Ltd., Sabae-shi, Fukui-ken 916-0088 (JP); Monajapan Co., Ltd., Fukui-shi, Fukui-ken 918-8016 (JP)
(72) Inventor: Horikawa, Kaoru, Charmant Co.,Ltd., Sabae-shi, Fukui-ken 916-0088 (JP); Kobayasi, Mitsuo, Fukui-shi, Fukui-ken 918-8016 (JP)
(74) Representative: Goddar, Heinz J., Dr.

(57) **Abstract**

In a turning mechanism capable of swinging a shaft (12) of a temple arm (1) relative to a shaft (12) of a bracket (2) with a given friction force, the temple arm (1) can be simply attached to the shaft (12) of the bracket (2) with an excellent swinging function. In the turning mechanism for collapsively supporting the temple arm (1) relative to the bracket (2), the bracket (2) is provided with a shaft support (2A) having a shaft support hole (21), wherein the shaft support (2A) having a guide groove (22) which is positioned vertically relative to an axis thereof and a notched portion (23) adapted for outwardly opening the notched portion (23), and the temple arm (1) is provided with a temple rod (11), and a plastic shaft (12) attached to the temple rod (11), wherein the shaft (12) of the temple arm (1) is elastically mounted in the shaft support hole (21) of the bracket (2) while the temple rod (11) is guided along and swingable relative to the guide groove (22) when the temple rod (11) is passed through the notched portion (23) of the shaft support (2A) of the bracket (2).

## Description

The invention relates to eyeglasses, particularly to a turning mechanism of brackets and temple arms without requiring the use of joints.

In conventional eyeglasses, brackets integrated with a front frame and temple arms are collapsibly connected to each other by joints serving as a turning mechanism.

However, the eyeglasses of this type have such drawbacks that the temple arms generate a play because screws and bolts serving as the shafts of joints loose when the temple arms are repeatedly collapsed.

Accordingly, the screws must be re-screwed periodically by an exclusive driver, etc., which has been very troublesome.

Under the circumstances, there have been developed many turning mechanisms having a simple structure with no use of screws, bolts, etc., which are different from the turning mechanism using joints.

Among them, there are some turning mechanisms capable of very simply attaching the brackets and temple arms to each other.

For example, a turning mechanism shown in JP-A 9-325303 is adapted so that spring pins are fixed to temple arms by brazing, and rings are fixed to brackets so that the spring pins are mounted on the rings, leading to the swinging movement of the temple arms. That is, the turning mechanism includes shafts or spring pins which pressed into the shaft supports or rings to give friction force thereto.

In this case, since the spring pins are rotatably pressed and held by the rings, they can give resisting force to the swinging movement of the temple arms.

Further, this turning mechanism has an effect that the temple arms can be attached to the brackets in a snap.

However, in this turning mechanism, brazing is performed to attach steel spring pins to the steel temple arms.

Since the spring pins are different from the temple arm bodies in function, it is necessary to manufacture them by different materials. However, the materials are limited to the range of type because they are brazed.

For example, it is preferable that the steel spring pins are changed to an elastic material such as plastics having the same elasticity of the temple arm bodies in order to render the eyeglasses light in weight. In such a case, it is practically difficult to fix the spring pins to the temple arm bodies by brazing.

Still further, recent eyeglasses employ very small steel wires as the material of the temple arms in view of light weight thereof, which causes a problem that a jointing portion between the spring pins and the temple arm bodies is inferior in strength because of a small jointing area.

The invention has been made to solve the aforementioned problem.

It is an object of the invention to provide a turning mechanism capable of swinging shafts of temple arms relative to shaft supports of brackets without requiring the use of joints with a given friction force generated therebetween, whereby the shafts of the brackets can be simply attached to the temple arms and the turning mechanism is excellent in swinging function.

Inventors of the invention endeavored themselves to achieve the above objects, they have found that the shafts of the temple arms can be simply attached to the brackets by penetrating the temple arms to the shafts, based on which they completed the invention.

That is, a first aspect of the invention resides in a turning mechanism for collapsibly supporting temple arms relative to brackets comprising the brackets each provided with a shaft support having a shaft support hole, wherein the shaft support having a guide groove which is positioned vertically relative to an axis thereof and a notched portion for opening the guide groove outward, and the temple arms each provided with a temple rod, and a plastic shaft attached to the temple rod, wherein the shaft of the temple arm is elastically mounted in the shaft support hole of the bracket while the temple rod is guided along and swingable relative to the guide groove when the temple rod is passed through the notched portion of the shaft support of the bracket.

A second aspect of the invention resides in the turning mechanism of the first aspect of the invention wherein the temple rod is mounted on the shaft by engaging a bent tip end of the temple rod which passed through the shaft in a recess provided at the outer periphery of the shaft.

A third aspect of the invention resides in the turning mechanism of the second aspect of the invention wherein the tip end of the temple rod extends upward and downward.

A fourth aspect of the invention resides in the turning mechanism of the first aspect of the invention wherein the temple rod is mounted on the shaft by engaging a sectorial tip end of the temple rod which is enlarged at both sides in an expanded space formed in a through hole of the shaft.

A fifth aspect of the invention resides in the turning mechanism of the first aspect of the invention wherein the guide groove has a recess in which the temple arm is engaged to prevent the temple arm from being collapsed.

A sixth aspect of the invention resides in the turning mechanism of the first aspect of the invention wherein the shaft of the temple arm has a flexible material serving as a cushion between a part of the temple arm and the bracket when temple arms are erected.

A seventh aspect of the invention resides in the turning mechanism of the second aspect of the invention wherein the shaft support hole of the bracket has a longitudinal groove whereby the temple arm is temporarily fixed at a certain angle when the tip end of the temple rod is engaged in the vertical groove.

An eighth aspect of the invention resides in the turning mechanism of the first aspect of the invention wherein the notched portion is provided within an angle formed by the temple arm when swung.

A ninth aspect of the invention resides in a turning mechanism for swingably supporting temple arms relative to brackets comprising the brackets each provided with a shaft support having a shaft support hole, wherein the shaft support having a guide groove which is positioned vertically relative to an axis thereof and a notched portion for opening the guide groove toward an outside, and the temple arms each provided with forked branched temple rods, and a plastic shaft attached to the temple rod by crossing grooves, wherein the shafts of the temple arm are elastically mounted in the shaft support hole of the bracket while the forked branched temple rods are guided along and swung relative to the guide grooves when the forked branched temple rods are inserted into the notched portion of the shaft support of the bracket.

A tenth aspect of the invention resides in eyeglasses provided with turning mechanism according to any one of the first to nine aspects of the invention.

It is needless to say that the invention can employ the construction formed by combining two or more aspects of the invention selected from the aforementioned ten aspects of the invention so long as it satisfies the object of the invention.
Fig. 1 is a view of eyeglasses provided with a turning mechanism according to a first embodiment of the invention;
Fig. 2 is a view of a temple rod;
Fig. 3(A) is a front view of a shaft, Fig. 3(B) is a sectional view of the shaft taken along the lines B-B in Fig. 3(A) and Fig. 3(C) is a rear view of the shaft;
Figs. 4(A) to Fig. 4(C) shows a sequence of attaching the shaft to the temple rod, wherein Fig. 4(A) shows a state before attachment thereof, Fig. 4(B) shows a state of insertion therebetween, and Fig. 4(C) shows a state after attachment thereof;
Fig. 5(A) is a front view of a bracket, Fig. 5(B) is a plan view of the bracket, Fig. 5(C) is a bottom view of the bracket and Fig. 5(D) is a perspective view of the bracket;
Figs. 6(A) to 6(C) show an attaching relation between the bracket and the temple arm, wherein Fig. 6(A) shows a state before attachment thereof; Fig. 6(B) shows a state after attachment thereof, and Fig. 6(C) shows a state after the temple arm is swung.
Figs. 7(A) and 7(B) show a connecting manner between the temple arm and the shaft, wherein Fig. 7(A) is a perspective view before the connection therebetween and Fig. 7(B) is a plan view after the connection therebetween;
Figs. 8(A) and 8(B) show another connecting manner between the temple arm and the shaft, wherein Fig. 8(A) is a perspective view before connection therebetween and Fig. 8(B) is a plan view after connection therebetween;
Figs. 9(A) to 9(C) show a connecting manner between forked rods of the temple arm and a shaft, wherein Fig. 9(A) is a perspective view before connection therebetween, Fig. 9(B) is a perspective view after connection therebetween and Fig. 9(C) is a front view of Fig. 9(B);
Figs. 10(A) and 10(B) show an attaching relation between a bracket and a temple arm according to a second embodiment of the invention, wherein Fig. 10(A) is a perspective view showing a state where a temple rod is engaged in a recess, and Fig. 10(B) is a front view of Fig. 10(A);
Figs. 11(A) and Fig. 11(B) show an attaching relation between a bracket and a temple arm according to a third embodiment of the invention, wherein Fig. 11(A) shows a state before attachment thereof, and Fig. 11(B) shows a state where the temple arm is swung after it is attached to the bracket;
Figs. 12(A) and Fig. 12(B) show an attaching relation between a bracket and a temple arm according to a fourth embodiment of the invention, wherein Fig. 12(A) shows a state before attachment thereof, and Fig. 12(B) shows a state where the temple arm is swung after it is attached to the bracket;
Figs. 13(A) and Fig. 13(B) show an attaching relation between a bracket and a temple arm according to a fifth embodiment of the invention, wherein Fig. 13(A) shows a state before attachment thereof, and Fig. 13(B) shows a state where the temple arm is swung after it is attached to the bracket;
Figs. 14(A) to Fig. 14(C) show a sequence of attaching the shaft to the temple rod, wherein Fig. 14(A) show a state before attachment thereof, Fig. 14(B) shows a state of insertion therebetween and Fig. 14(C) shows a state after attachment thereof; and
Fig. 15 shows an attaching relation between a bracket and a temple wherein a temple rod is linearly formed and the tip end thereof is expanded to both sides to form a sectorial shape.

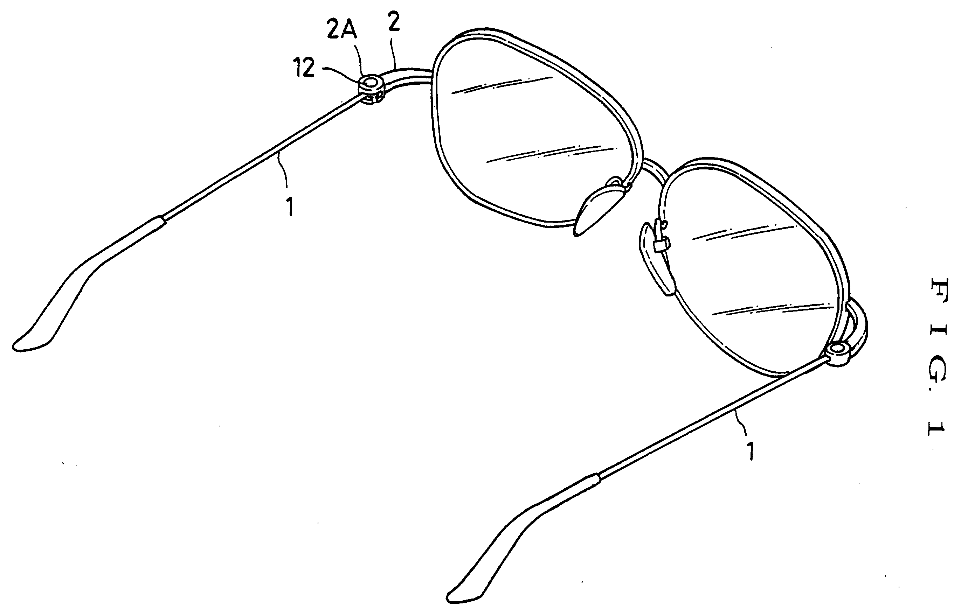

A turning mechanism according to a first embodiment of the invention will be described with reference to Figs. 1 to 9.

Fig. 1 is a view of eyeglasses provided with a turning mechanism which is featured by the invention.

Each temple arm 1 is supported by each bracket 2 of the eyeglasses so as to swing relative to the bracket 2.

Meanwhile, each temple arm 1 comprises a temple rod 11 and a shaft 12 which are respectively independent parts and integrally assembled with each other.

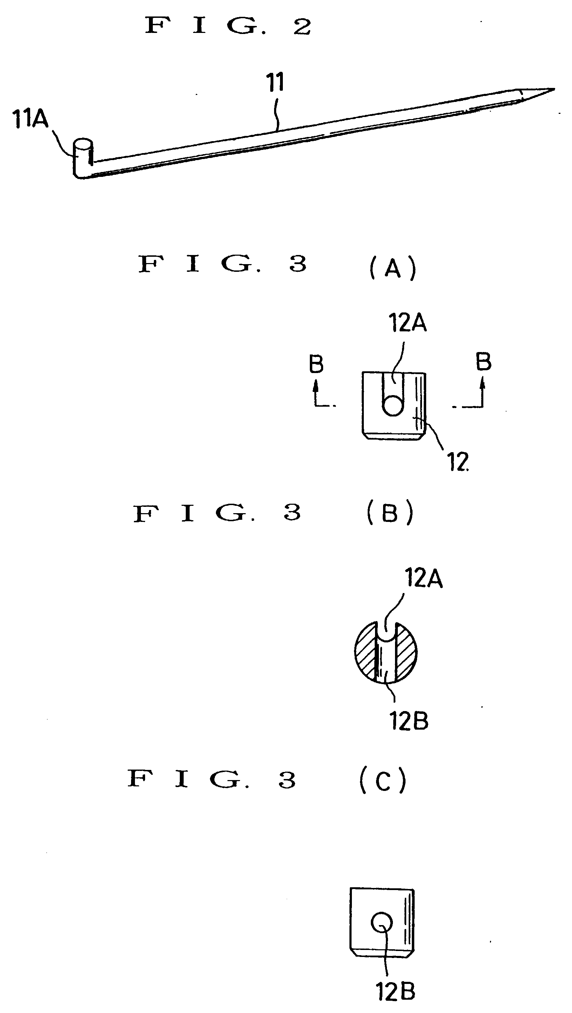

Fig. 2 shows the temple rod 11 constituting the temple arm 1 and Figs. 3(A) to 3(C) show the shaft 12 of the temple arm 1 wherein Fig. 3(A) is a front view, Fig. 3(B) is a sectional view taken along the lines B-B of Fig. 3(A) and Fig. 3(C) is a rear view.

First, the temple rod 11 is linearly formed and the tip end 11A of the temple rod 11 is bent substantially perpendicularly. An ear pad is fixed later to the rear end of the temple rod 11.

Meanwhile, the shaft 12 is formed columnar as shown in Figs. 3(A) to 3(C), and a through hole 12B provided perpendicularly relative to the axis of the shaft 12 by penetrating the shaft 12.

A recess 12A is provided on the outer periphery of the shaft 12 in the axial direction thereof and the recess 12A has a depth in which the tip end 11A of the temple rod is completely engaged or the tip end 11A slightly protrudes from the recess 12A after engagement therein.

It is preferable that the width of the recess 12A is narrower than the thickness of the temple rod 11, which will be described later.

As a material of the temple rod 11, all metals which have been now used in eyeglasses can be used, particularly, metals such as stainless, a Ti-alloy such as β-titanium, etc., titanium-nickel alloy.

Although a material having a given elasticity is employed as the material of the shaft 12, it is preferable to employ, for example, nylon, polyacetale, polycarbonate, fiber resin, ABS, AS, acrylic plastic, polyester, polyethel, nylon elastomer, etc. because they have proper elasticity.

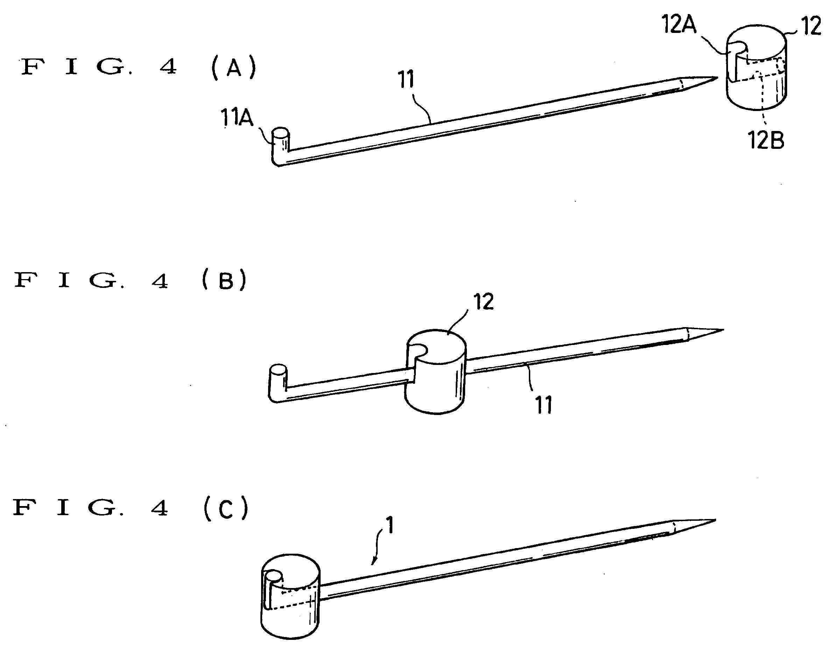

Figs. 4(A) to 4(C) are views showing a sequence to attach the shaft 12 to the temple rod 11.

The temple rod 11 is inserted into a through hole 12B provided in the shaft 12 from the other tip and opposite to the tip end 11A and the tip end 11A is finally pressed into the recess 12A of the shaft (see Figs. 4(A) → 4(B) → 4(C)).

In this case, since the shaft 12 has a proper elasticity, the tip end 11A of the temple arm is elastically held by the recess 12A of the shaft, and hence the temple rod 11 is prevented from readily drawing from the recess 12A once engaged therein.

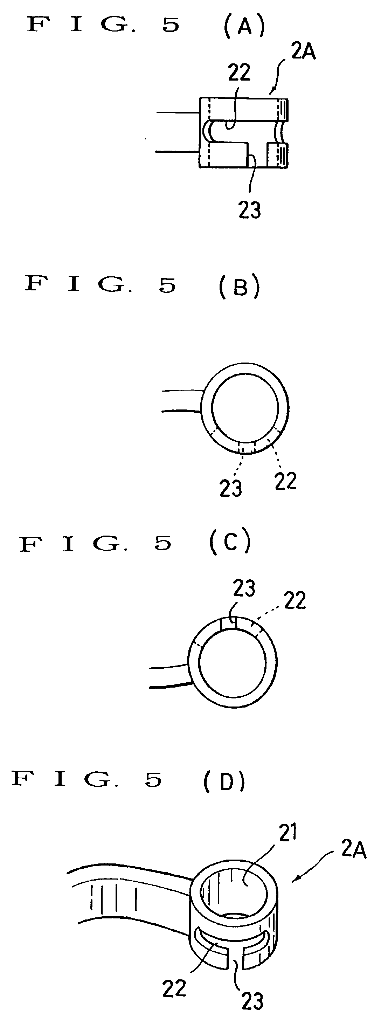

Figs. 5(A) to 5(B) show the bracket 2, wherein Fig. 5(A) is a front view, Fig. 5(B) is a plan view, Fig. 5(C) is a bottom view and Fig. 5(D) is a perspective view.

The bracket 2 includes a shaft support 2A having a shaft support hole 21 to which the temple arm 1 is attached. The shaft support 2A comprises a guide groove 22 provided perpendicularly relative to the axis of the shaft support 2A and a notched portion 23 adapted for outwardly opening the guide groove 22.

Accordingly, a T-shaped groove (a combination of the guide groove 22 and the notched portion 23) is formed in the shaft support 2A.

The notched portion 23 is provided in the shaft support 2A within an angle formed by the temple arm when swung since the shaft 12 is preferably positioned at the portion where the shaft 12 is easily attached to the shaft support 2A when the shaft 12 is attached to the shaft support 2A.

The guide groove 22 has a sufficient width so that the temple rod 11 can move along the guide groove 22 without generating play.

As the material of the bracket 2, alloys having a strength and working property such as nickel silver, monel, Ni based alloy, etc., are suitably employed.

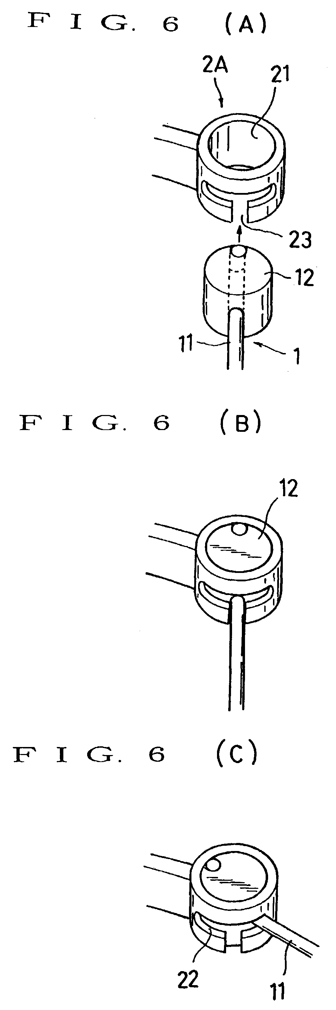

Figs. 6(A) to 6(C) are views showing an attaching relation between the bracket 2 and the temple arm 1.

When the shaft 12 of the temple arm is attached to the bracket 2, the temple rod 11 is positioned under the shaft support 2A and it is passed through the notched portion 23 of the bracket 2, then the shaft 12 is pressed into the shaft support hole 21 of the bracket 2 (see Figs. 6(A) → 6(B)).

Since the shaft support hole 21 of the shaft support 2A of the bracket 2 has a diameter which is smaller than the diameter of the shaft 12 of the temple arm, the shaft 12 is attached to the shaft support 2A while the former is fastened by and engaged in the latter.

In a state where the shaft 12 is mounted in the shaft support hole 21 of the bracket 2, the temple rod 11 is guided along the guide groove 22 and smoothly swung as shown in Fig. 6(C).

Since the shaft 12 is formed of plastics having proper resiliency, it becomes in a state where the shaft 12 is elastically mounted on the shaft support 2A, thereby providing proper resistance in a moderate sense in a swing movement of the temple arm 1.

If the upper portion of the shaft support hole 21 of the shaft support 2A is closed, the shaft 12 mounted in the shaft support hole 21 is not seen from the outside, so that the shaft support 2A looks better (not shown).

When the temple arm 1 is attached to the bracket 2, the shaft 12 of the temple arm may be pressed oppositely to the direction shown in Fig. 6(A) (not shown).

When the temple rod 11 is attached to the shaft 12, first the temple rod 11 is inserted into and passed through the through hole 12B of the shaft, then the bent tip end 11A is engaged in the recess 12A provided on the outer periphery of the shaft, as described previously.

Accordingly, the tip end 11A of the temple rod may be bent not only in one direction (e.g., upward direction) but also upward and downward directions, and in the latter case the upper and lower tip ends are engaged in the recess provided on the outer periphery of the shaft, thereby more stabilizing the fixing force therebetween.

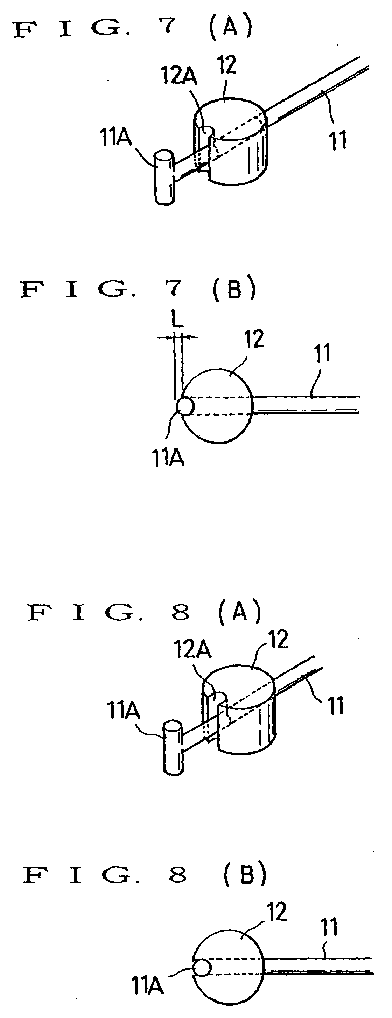

Figs. 7(A) and 7(B) are views showing a connecting state between the tip end 11A which is bent in upward and downward directions and the shaft 12.

As shown in Figs. 7(A) and 7(B), the temple rod 11 is inserted into the shaft 12, and the tip end 11A is engaged in the recess 12A so that the temple rod 11 is attached to the shaft 12 in a state where the temple rod 11 is slightly protruding outward from the outer periphery of the shaft by a distance L in Fig. 7(B).

Figs. 8(A) and 8(B) are views showing a connecting state between the tip end 11A which is bent in upward and downward directions and the shaft 12 like Figs. 7(A) and 7(B), wherein when the shaft 12 is inserted into and fixed to the temple rod 11, the tip end 11A is engaged in the recess 12A and the tip end 11A does not protrude outward.

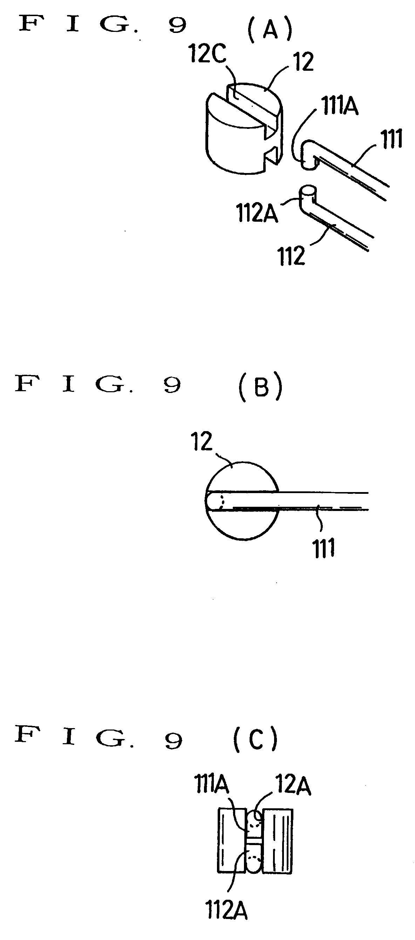

Figs. 9(A) and 9(B) show an example of forked branched temple rods 111 and 112 having the tip ends 111A and 111B which are bent in opposite direction.

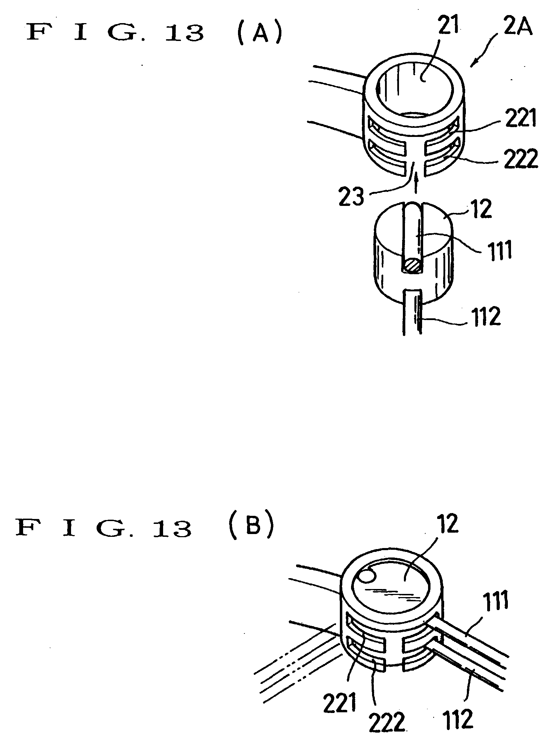

There are provided crossing grooves 12C on the upper and lower portions of the shaft 12 which cross the shaft 12 in the radial direction of the shaft 12 and the forked branched temple rods 111 and 112 are engaged in the crossing grooves 12C. That is, the temple rod 11 is elastically pressed against and attached to the shaft 12 in the manner of clamping a so-called middle wall of the shaft 12 by a pair of forked branched temple rods 111 and 112. At this time, the tip ends 111A and 111B are in a state where they are engaged in recesses 12A provided on the outer periphery of the shaft 12. The shaft support 2A corresponding to the shaft 12 is shown in Fig. 13(A) and 13(B).

It is preferable that the temple arm 1 is stopped in a stable state in the positions where the temple arm 1 is collapsed relative to the frame of the eyeglasses.

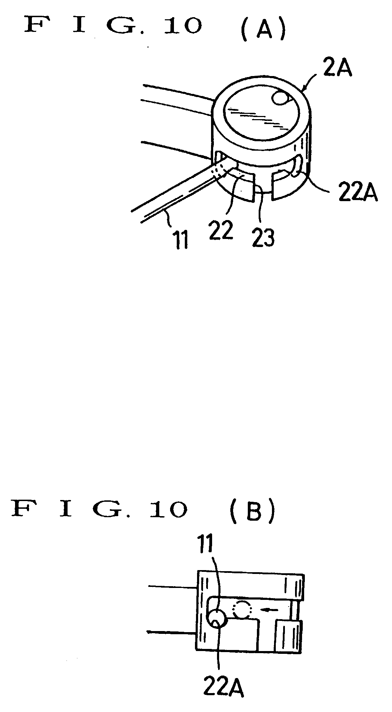

In a second embodiment as shown in Figs. 10(A) and 10(B), recesses 22A are formed in a guide groove 22 of a bracket 2 wherein a temple rod 11 is engaged in one of the recesses 22A when it is positioned at either end of the guide groove 22. It is preferable that the temple rod 11 is slightly moved in the axial direction (downward in the figure) in order to engage the temple rod 11 in the recesses 22A (see Fig. 10(B)).

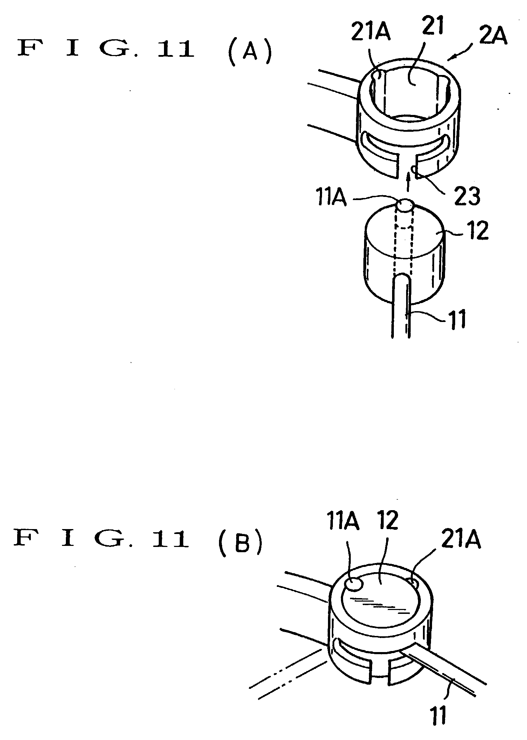

In a third embodiment as shown in Figs. 11(A) and 11(B), a temple arm 1 can be stopped in a stable state in the positions where the temple arm 1 is closed or opened relative to the frame of the eyeglasses like the second embodiment wherein longitudinal grooves 21A are formed in the inner surface of a shaft support hole 21 of the bracket 2 in the axial direction (see Fig. 11(A)).

As the temple arm 1, there is employed a temple arm having a bent tip end 11A of the temple rod 11 a part of which is slightly protruding from the outer peripheral surface of a shaft 12 in a state where the bent tip end 11A of the temple rod 11 is engaged in a recess 12A.

If the shaft 12 is mounted in the shaft support hole 21 of the bracket 2, the bent tip end 11A of the temple arm 1 is engaged in the longitudinal grooves 21A and the stopping state of the temple arm 1 is stabilized in a state where the temple rod 11 is positioned at both ends of the guide groove 22, namely in the closed or opened state of the temple arm 1 (see Fig. 11(B)).

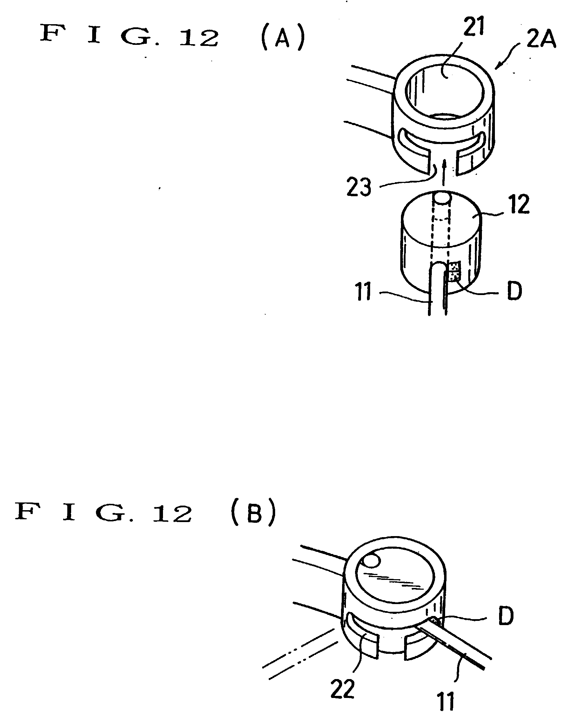

In a fourth embodiment as shown in Figs. 12(A) and 12(B), a cushion function is performed between a part of a temple arm 1 and a bracket 2 in a state where the temple arm 1 is opened.

That is, a flexible member D which performs a cushion function is interposed between the part of the temple arm 1 and the bracket 2. In this case, a notched portion 23 of a shaft support 2A of the bracket 2 is formed to be slightly wider than the diameter of the temple arm.

The flexible member D is provided at the root of a temple rod 11. When a shaft 12 of the temple arm is mounted in a shaft support hole 21, the flexible member D is compressed and can pass through a notched portion 23 together with the temple rod 11 (see Fig. 12(A)).

If the temple rod 11 is opened and positioned in one end of a guide groove 22 in a state where the shaft 12 is mounted in the shaft support hole 21, the flexible member D performs a cushion function because the flexible member D is provided between the temple arm 1 and the end of the guide groove 22 (see Fig. 12(B)). That is, in the open state of the temple arm, the temple arm 1 can softly contact the face when wearing eyeglasses because the flexible member D performs a cushion function.

In a fifth embodiment as shown in Figs. 13(A) and 13(B), there is described a turning mechanism using a temple arm 1 having the forked branched temple rods 111 and 112 as shown in Figs. 9(A) to 9(C).

A bracket 2 has two guide grooves 221 and 222 which are arranged in two lines as shown in Figs. 13(A) and 13(B) and a notched portion 23 communicates with the guide grooves 221 and 222 and opened outward.

It is possible to simply attach a shaft 12 of a temple arm to the bracket 2 by passing branched temple rods 111 and 112 through the notched portion 23 of the bracket 2 in the same manner as the previous embodiments.

In a state where the shaft 12 is mounted in the shaft support hole 21 of the bracket 2, the branched temple rods 111 and 112 of the temple arm are moved along the two guide grooves 221 and 222, the swing operation of the temple arm 1 is highly stabilized and smoothly performed.

In the first to fifth embodiments, the tip end of the temple arm is bent but in a sixth embodiment, the tip end 11B of the temple arm is enlarged at both sides to form a sectorial shape.

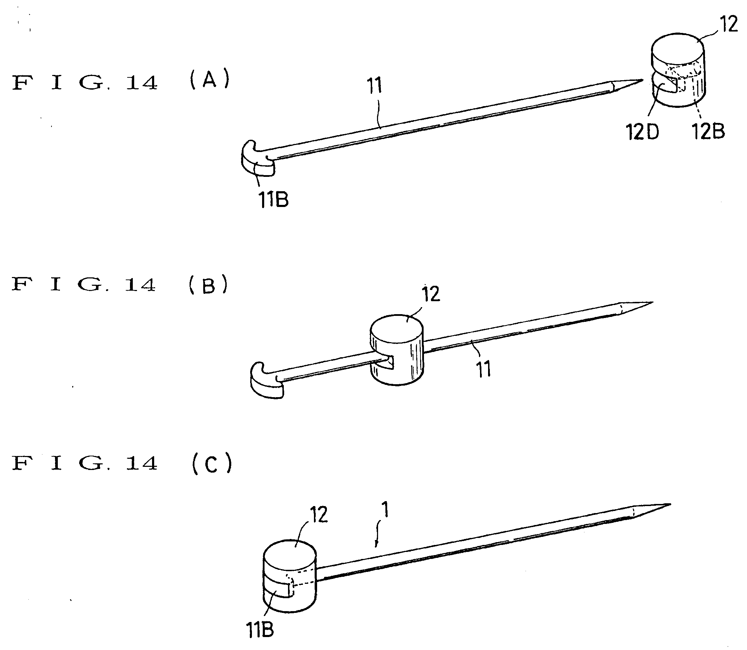

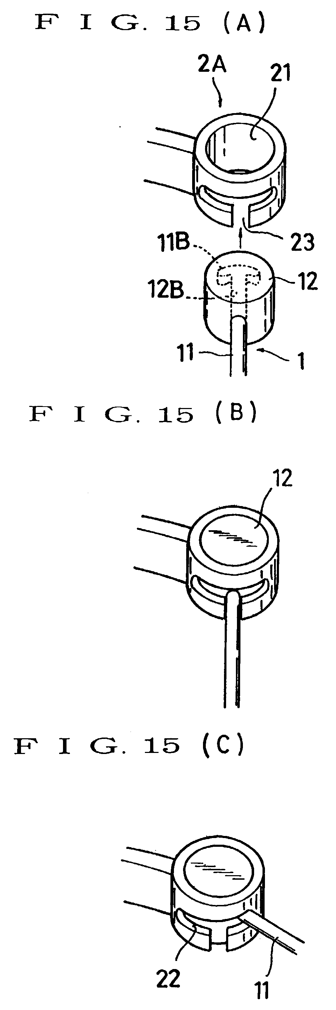

Figs. 14(A) to 14(C) and Figs. 15(A) to 15(C) show a sixth embodiment of the invention.

Figs 14(A) to 14(C) show a sequence of attaching the shaft to the temple rod, where Fig. 14(A) is a perspective view before the attachment thereof, Fig. 14(B) is a perspective view at the time of insertion therebetween and Fig. 14(C) is a perspective view after the attachment thereof.

Fig. 15(A) to 15(C) are views showing attaching relation between a bracket 2 and a temple arm 1. A temple rod 11 is linearly formed and the tip end 11B of the temple rod 11 is enlarged at both sides to form a sectorial shape.

In this case, the tip end 11B of the temple rod 11 is designed to have a large diameter and the tip end 11B having the sectorial shape can be obtained by subjecting the tip end 11B to a smashing process by forging.

The shaft 12 is formed columnar and an expansion space 12D is formed in a through hole 12B which penetrates perpendicularly relative to the axis of the shaft 12 to be opened outward.

To attach the temple rod 11 to the shaft 12, the temple rod 11 is inserted into the through hole 12B of the shaft 12, then the sectorial tip end 11B of the temple rod is pressed into the expansion space 12D of the shaft (see Figs. 14(A) → 14(B) → 14(C)).

In this case, if the thickness of the tip end 11B of the temple rod is set to be slightly longer than the spatial thickness of the expansion space 12D of the shaft 12, the sectorial tip end 11B is elastically held by the expansion space 12D owing to the proper resiliency of the plastic shaft 12 so that the temple rod 11 once engaged in the shaft 12 is prevented from readily drawing therefrom.

Since the sectorial tip end 11B of the temple rod has a relatively large area, the connecting force between itself and the shaft 12 is sufficient and the tip end 11B and the shaft 12 are integrated with each other, resulting in no generation of a play therebetween.

The manner of attaching the shaft 12 to the bracket 2 is the same as that described in the first embodiment.

Since a shaft support hole 21 of a shaft support 2A of the bracket 2 has a diameter slightly smaller than the diameter of the shaft 12, the shaft 12 is attached to the shaft support 2A while the former is fastened by and engaged in the latter.

Accordingly, the swing movement of the temple arm 1 relative to the bracket 2 is moderate (resistive), which is the same as set forth in the aforementioned embodiments.

The invention has been described with reference to the aforementioned embodiments, but it is not limited to these embodiments and it can be modified variously.

For example, the external shape of the shaft support is not limited to a circular shape but may employ a square or rectangular shape.

Further, although the shaft support is provided at the bracket side and the shaft is provided at the temple arm side, it is needless to say that they may be provided vice versa.

Since joints are not used, screws do not loose to obtain proper resistive feeling when swinging the temple arms.

Since the shaft and the temple arms can be surely attached by insertion and engagement therebetween without heat such as brazing or the like, the shaft can employ plastics as a material thereof.

The proper resiliency of plastics renders the swinging resistance of the temple arms more appropriate.

The temple arms and the brackets can be simply attached to each other in a snap.

The features disclosed in the foregoing description, in the claims and/or in the accompanying drawings may, both separately and in any combination thereof, be material for realising the invention in diverse forms thereof.

## Claims

1. A turning mechanism for collapsibly supporting temple arms (1) to be swung relative to brackets (2) comprising;
the brackets (2) each provided with a shaft support (2A) having a shaft support hole (21), wherein the shaft support (2A) having a guide groove (22) which is positioned vertically relative to an axis thereof and a notched portion (23) adapted for outwardly opening the guide groove (22); and
the temple arms (1) each provided with a temple rod (11) , and a plastic shaft (12) attached to the temple rod (11);
wherein the shaft (12) of each temple arm (1) is elastically mounted in the shaft support hole (21) of each bracket (2) while the temple rod (11) is guided along and swingable relative to the guide groove (22) when the temple rod (11) is passed through the notched portion (23) of the shaft support (2A) of each bracket (2).

2. The turning mechanism according to Claim 1, wherein the temple rod(11) is mounted on the shaft (12) by engaging a bent tip end (11A) of the temple rod (11) which passed through the shaft (12) in a recess (12A) provided at the outer periphery of the shaft (12).

3. The turning mechanism according to Claim 2, wherein the tip end (11A) of the temple rod (11) extends upward and downward.

4. The turning mechanism according to Claim 1, wherein the temple rod (11) is mounted on the shaft (12) by engaging a sectorial tip end (11A) of the temple rod (11) which is enlarged at both sides in an expanded space formed in a through hole (12B) of the shaft (12).

5. The turning mechanism according to Claim 1, wherein the guide groove (22) has a recess (12A) in which the temple arm (1) is engaged to prevent the temple arm (1) from being swung.

6. The turning mechanism according to Claim 1, wherein the shaft (12) of the temple arm (1) has a flexible material serving as a cushion between a part of the temple arm (1) and the bracket (2) when the temple arm (1) is erected.

7. The turning mechanism according to Claim 2, wherein the shaft support hole (21) of each bracket (2) has a longitudinal groove whereby the temple arm (1) is temporarily fixed at a certain angle when the tip end (11A) of the temple rod (11) is engaged in the longitudinal groove.

8. The turning mechanism according to Claim 1, wherein the notched portion (23) is provided within an angle formed by each temple arm (1) when swung.

9. A turning mechanism for collapsively supporting temple arms (1) relative to brackets (2) comprising:
the brackets (2) each provided with a shaft support (2A) having a shaft support hole (21), wherein the shaft support (2A) having a guide groove (22) which is positioned vertically relative to an axis thereof and a notched portion (23) adapted for outwardly opening the notched portion (23); and
the temple arms (1) each provided with forked branched temple rods (111, 112), and plastic shafts (12) attached to the forked branched temple rods (111, 112) by crossing grooves;
wherein the shafts (12) of the temple arm (1) are elastically mounted in the shaft support hole (21) of the bracket (2) while the forked branched temple rods (111, 112) are guided along and swung relative to the guide grooves (22) when the forked branched temple rods (111, 112) are inserted into the notched portion (23) of the shaft support (2A) of the bracket (2).

10. Eye glasses provided with the turning mechanism according to any one of Claims 1 to 9.
